# FASCICULE DE BREVET EUROPEEN

(11) **EP 3 798 189 B1**
(45) Date de publication et mention de la délivrance du brevet: **20.04.2022**
(21) Numéro de dépôt: 20196845.0
(22) Date de dépôt: 18.09.2020
(51) Int. Cl.: C01B 37/02, C01B 39/06, C01B 39/48

(54) **PROCEDE DE PREPARATION D'UNE ZEOLITHE IZM-2 EN PRESENCE D'UN STRUCTURANT ORGANIQUE AZOTE SOUS FORME HYDROXYDE ET D'UN CHLORURE DE METAL ALCALIN EN MILIEU FLUORE OU NON**
SYNTHESEVERFAHREN VON IZM-2-ZEOLITH IN GEGENWART EINES STICKSTOFFHALTIGEN ORGANISCHEN STRUKTURBILDNERS IN DER HYDROXIDFORM UND EINES ALKALIMETALLCHLORIDS, IN EINEM FLUORIERTEN ODER NICHT FLUORIERTEN MEDIUM
METHOD FOR SYNTHESISING ZEOLITE IZM-2 IN THE PRESENCE OF A NITROGEN-CONTAINING ORGANIC STRUCTURING AGENT IN THE HYDROXIDE FORM AND OF AN ALKALI METAL CHLORIDE, IN A FLUORINATED OR NOT FLUORINATED MEDIUM

(30) Priorité: 26.09.2019 FR 1910619
(43) Date de publication de la demande: 31.03.2021
(73) Titulaire: IFP Energies nouvelles, 92852 Rueil-Malmaison Cedex (FR)
(72) Inventeur: MARTINEZ FRANCO, Raquel, 92852 RUEIL-MALMAISON CEDEX (ES); PRIGENT, Monique, 92852 RUEIL-MALMAISON CEDEX (FR)
(74) Mandataire: IFP Energies nouvelles

(56) Documents cités:
- FR-A1- 3 064 261
- FR-A1- 3 064 262

## Description

### Domaine technique

La présente invention se rapporte à un nouveau procédé de préparation d'un solide cristallisé microporeux, appelé solide microporeux IZM-2 ou zéolithe IZM-2. Ce nouveau procédé permet de réaliser la synthèse d'une zéolithe IZM-2 en présence d'une espèce organique ou structurante spécifique comportant deux fonctions ammonium quaternaire. En particulier, ledit nouveau procédé permet de réaliser la synthèse d'une zéolithe IZM-2 à la fois en milieu fluoré ou non fluoré, à partir d'au moins une source de silicium, d'au moins une source d'aluminium, d'au moins une source d'au moins un métal alcalin M de valence n choisie parmi les chlorures de métaux alcalin et d'une molécule organique ou structurant spécifique comportant deux fonctions ammonium quaternaire, le dihydroxyde de 1,6-bis(méthylpiperidinium)hexane. Ledit solide microporeux IZM-2 obtenu selon le procédé de l'invention trouve avantageusement son application en tant que catalyseur, adsorbant ou agent de séparation.

### Technique antérieure

Les matériaux microporeux cristallisés, tels que les zéolithes ou les silicoaluminophosphates, sont des solides très utilisés dans l'industrie pétrolière en tant que catalyseur, support de catalyseur, adsorbant ou agent de séparation. Bien que de nombreuses structures cristallines microporeuses aient été découvertes, l'industrie du raffinage et de la pétrochimie est toujours à la recherche de nouvelles structures zéolitiques qui présentent des propriétés particulières pour des applications comme la purification ou la séparation des gaz, la conversion d'espèces carbonées ou autres.

La zéolithe IZM-2 est un solide ayant une structure inconnue. Des réactions modèles ont été employée (isomérisation et dismutation méta-xylènes et l'isomérisation-hydrocraquage de n-décane) dans l'objective de prédire la topologie du matériau microporeux IZM-2 (Fecant et al. dans J.Catal., 20, (2013) 20-29). Les résultats obtenus pour ces réactions, permettent de penser que la structure du matériau IZM-2 est constituée de deux types de taille de pores (10-MR et 12-MR).

La zéolithe IZM-2 a été synthétisée dans sa forme aluminosilicate (Fecant et al. FR2918050 A1) et sous sa forme purement silicique (Fecant et al. FR2918050 A1 et Li et al. dans Microporous Mesoporous Mater., 237 (2017) 222-227), en utilisant l'ion ammonium quaternaire 1,6-bis(méthylpiperidinium)hexane comme structurant, sous sa forme hydroxyde ou bromure. Dans ces documents, la synthèse consiste à effectuer un traitement hydrothermal d'un gel aqueux contenant une source de silicium, un agent structurant (1,6-bis(méthylpiperidinium)hexane) et éventuellement une source d'aluminium amorphe, et éventuellement une source d'un métal alcalin et/ou alcalino-terreux (NaOH).

Récemment, la zéolithe IZM-2 a été préparée en utilisant une zéolithe de type structural FAU comme source de silicium et d'aluminium (Martinez Franco et al. FR 3064262 A1, FR 3064261 A1).

Dans la demande FR 3064262 A1, la synthèse consiste à effectuer un traitement hydrothermal d'un gel aqueux contenant une zéolithe de type structural FAU comme source de silicium et d'aluminium, éventuellement une source additionnelle de SiO₂, un agent structurant spécifique, le bromure de (1,6-bis(méthylpiperidinium)hexane), une source d'un métal alcalin et/ou alcalino-terreux (de préférence NaOH) et éventuellement une source d'au moins un anion fluorure BF.

Dans la demande FR 3064261 A1, la synthèse consiste à effectuer un traitement hydrothermal d'un gel aqueux contenant une zéolithe de type structural FAU comme source de silicium et d'aluminium, éventuellement une source additionnelle de SiO₂, un agent structurant spécifique, le dihydroxyde de (1,6-bis(méthylpiperidinium)hexane), et une source d'au moins un anion fluorure BF, et éventuellement en présence d'une source d'un métal alcalin et de préférence NaOH.

La présente invention a pour objet un nouveau procédé de préparation d'une zéolithe IZM-2 synthèse qui consiste à effectuer un traitement hydrothermal d'un gel aqueux contenant une source de silicium et une source d'aluminium amorphe, un agent structurant spécifique, le (1,6-bis(méthylpiperidinium)hexane) sous sa forme dihydroxyde, en combinaison avec une source d'un chlorure de métal alcalin M spécifique, (de préférence NaCl), en milieu fluoré ou non.

Ainsi, la demanderesse a découvert que le composé organique azoté ou structurant comportant deux fonctions ammonium quaternaires, le dihydroxyde de 1,6-bis(méthylpiperidinium)hexane, mis en mélange en présence d'au moins une source de silicium, d'au moins une source d'aluminium, et éventuellement d'autres sources d'au moins un élément trivalent et/ou d'au moins un élément tétravalent, d'au moins une source d'au moins de métal alcalin M de valence n, choisie parmi les chlorures de métaux alcalin, n étant un entier supérieur ou égal à 1, en présence ou non d'une source d'au moins un anion fluorure, conduit à la production d'un gel précurseur d'une zéolithe IZM-2 de très haute pureté. Toute autre phase cristallisée ou amorphe est généralement et très préférentiellement absente du solide cristallisé constitué de la zéolithe IZM-2 obtenue à l'issue du procédé de préparation.

### Résumé de l'invention

En particulier, l'invention concerne un procédé de préparation d'une zéolithe IZM-2 comprenant au moins les étapes suivantes :
i) le mélange en milieu aqueux, d'au moins une source d'au moins d'un élément tétravalent X sous forme oxyde XO₂, au moins une source d'au moins un élément trivalent sous forme oxyde Y₂O₃, d'un composé organique azoté R(OH)₂, R(OH)₂ étant le dihydroxyde de 1,6-bis(méthylpiperidinium)hexane, d'au moins une source d'au moins un métal alcalin M de valence n choisie parmi les chlorures de métaux alcalin, n étant un entier supérieur ou égal à 1, M étant choisi parmi le lithium, le potassium, le sodium, le césium, et le mélange d'au moins deux de ces métaux, et éventuellement en présence d'une source d'au moins un anion fluorure BF, le mélange réactionnel présentant la composition molaire suivante :
   XO₂/Y₂O₃ compris entre 70 et 350, de préférence entre 80 et 300
   H₂O/XO₂ compris entre 1et 100, de préférence entre 5 et 50
   R(OH)₂/XO₂ compris entre 0,006 et 0,25, de préférence entre 0,01 et 0,20
   M_{1/n}Cl/XO₂ compris entre 0,005 et 0,5, de préférence entre 0,01 et 0,4
   BF/XO₂ compris entre 0 et 0,25, de préférence entre 0 et 0,2,
   avec X étant choisi parmi le silicium, le germanium, le titane et le mélange d'au moins deux de ces éléments tétravalents et de préférence X étant le silicium,
   Y étant choisi parmi l'aluminium, le bore, le fer, l'indium et le gallium et le mélange d'au moins deux de ces éléments trivalent et de préférence Y étant l'aluminium, jusqu'à l'obtention d'un gel précurseur homogène; et BF étant choisi parmi les sels de fluor dans lequel B est un cation choisi parmi les cations NH₄⁺, Na⁺, K⁺ et Li⁺, et l'acide fluorhydrique en solution aqueuse,
ii) le traitement hydrothermal dudit gel précurseur obtenu à l'issue de l'étape i) à une température comprise entre 120°C et 220°C, pendant une durée comprise entre 1 jours et 10 jours.

La présente invention réside donc dans la préparation d'un gel précurseur d'une zéolithe IZM-2, en présence d'anions fluorés ou non, grâce à la combinaison d'une espèce organique ou structurant spécifique, comportant deux fonctions ammonium quaternaire, le dihydroxyde de 1,6-bis(méthylpiperidinium)hexane avec une source de métal alcalin M spécifique, le chlorure de métal alcalin (et de préférence le chlorure de sodium), ledit procédé étant mis en œuvre dans des conditions opératoires spécifiques, notamment terme de durée de traitement hydrothermal.

Un avantage de la présente invention est de fournir un nouveau procédé de préparation permettant la formation d'une zéolithe IZM-2 pure. Toute autre phase cristallisée ou amorphe est généralement et très préférentiellement absente du solide cristallisé constitué de la zéolithe IZM-2 obtenue à l'issue du procédé de préparation.

Un autre avantage de la présente invention est de permettre la préparation d'une zéolithe IZM-2 ayant un rapport SiO₂/Al₂O₃ compris entre 70 et 350 et de préférence entre 80 et 300.

### Description détaillée de l'invention

Conformément à l'invention, l'étape i) de mélange est réalisée en milieu aqueux, par le mélange d'au moins une source d'au moins un élément tétravalent X sous forme oxyde XO₂, d'au moins une source d'au moins un élément trivalent sous forme oxyde Y₂O₃, d'un composé organique azoté R(OH)₂, R(OH)₂ étant le dihydroxyde de 1,6-bis(méthylpiperidinium)hexane, d'au moins une source d'au moins un métal alcalin M de valence n choisie parmi les chlorures de métaux alcalin, n étant un entier supérieur ou égal à 1, avec M étant choisi parmi le lithium, le potassium, le sodium, le césium et le mélange d'au moins deux de ces métaux, et éventuellement en présence d'une source d'au moins un anion fluorure BF, le mélange réactionnel présentant la composition molaire suivante :
XO₂/Y₂O₃ compris entre 70 et 350, de préférence entre 80 et 300
H₂O/XO₂ compris entre 1et 100, de préférence entre 5 et 50
R(OH)₂/XO₂ compris entre 0,006 et 0,25, de préférence entre 0,01 et 0,20
M_{1/n}Cl/XO₂ compris entre 0,005 et 0,5, de préférence entre 0,01 et 0,4
BF/XO₂ compris entre 0 et 0,25, de préférence entre 0 et 0,2,
X étant choisi parmi le silicium, le germanium, le titane et le mélange d'au moins deux de ces éléments tétravalents et de préférence X étant le silicium,
Y étant choisi parmi l'aluminium, le bore, le fer, l'indium et le gallium et le mélange d'au moins deux de ces éléments trivalent et de préférence Y étant l'aluminium, jusqu'à l'obtention d'un gel précurseur homogène; et BF étant choisie parmi les sels de fluor dans lequel B est un cation choisi parmi les cations NH₄⁺, Na⁺, K⁺ et Li⁺, et l'acide fluorhydrique en solution aqueuse.

Le mélange de l'étape i) peut également comprendre en outre un ou plusieurs élément(s) tétravalent(s) X autre que le silicium, choisi(s) dans le groupe formé par les éléments suivants : germanium, titane et/ou le mélange peut également comprendre en outre un ou plusieurs élément(s) trivalent(s) Y, autre que l'aluminium choisi(s) dans le groupe formé par les éléments suivants : fer, bore, indium et gallium.

Dans la composition molaire du mélange réactionnel ci-dessus et dans l'ensemble de la description :
XO₂ désigne la quantité molaire du ou des élément(s) tétravalent(s) exprimée sous forme oxyde, et Y₂O₃ désigne la quantité molaire du ou des élément(s) trivalent(s) exprimée sous forme oxyde,
H₂O la quantité molaire d'eau présente dans le mélange réactionnel,
R(OH)₂ la quantité molaire dudit composé organique azoté,
M_{1/n}Cl la quantité molaire exprimée sous forme de M_{1/n}Cl de la source de métal alcalin présente sous forme de chlorure de métal alcalin.
BF la quantité molaire exprimée sous forme BF de la source d'anions fluorés.

Conformément à l'invention, au moins une source d'au moins un oxyde XO₂ est incorporée dans le mélange pour la mise en œuvre de l'étape (i) du procédé de préparation, X étant un ou plusieurs élément(s) tétravalent(s) choisi(s) dans le groupe formé par les éléments suivants : silicium, germanium, titane et de préférence X étant le silicium.

Lorsque X est le silicium, la ou les source(s) du(es)dit(s) élément(s) tétravalent(s) peu(ven)t être tout composé comprenant l'élément X et pouvant libérer cet élément en solution aqueuse sous forme réactive.

La source de silicium peut être l'une quelconque desdites sources couramment utilisée pour la synthèse de zéolithes, par exemple de la silice en poudre, de l'acide silicique, de la silice colloïdale, de la silice dissoute ou du tétraéthoxysilane (TEOS). Parmi les silices en poudre, on peut utiliser les silices précipitées, notamment celles obtenues par précipitation à partir d'une solution de silicate de métal alcalin, des silices pyrogénées, par exemple du "CAB-O-SIL" et des gels de silice. On peut utiliser des silices colloïdales présentant différentes tailles de particules, par exemple de diamètre équivalent moyen compris entre 10 et 15 nm ou entre 40 et 50 nm, telles que celles commercialisées sous les marques déposées telle que "LUDOX". De manière préférée, la source de silicium est le LUDOX HS-40.

Lorsque X est le titane, on utilise avantageusement Ti(EtO)₄ comme source de titane.

Conformément à l'invention, au moins une source d'au moins un oxyde Y₂O₃ est incorporée dans le mélange pour la mise en œuvre de ladite étape (i) du procédé de préparation selon l'invention, Y étant un ou plusieurs élément(s) trivalent(s) choisi(s) dans le groupe formé par les éléments suivants : aluminium, fer, bore, indium et gallium, et au moins un des éléments trivalents Y étant l'aluminium.

La source d'aluminium est de préférence de l'hydroxyde d'aluminium ou un sel d'aluminium, par exemple du chlorure, du nitrate, ou du sulfate, un aluminate de sodium, un alkoxyde d'aluminium, ou de l'alumine proprement dite, de préférence sous forme hydratée ou hydratable, comme par exemple de l'alumine colloïdale, de la pseudoboehmite, de l'alumine gamma ou du trihydrate alpha ou bêta. On peut également utiliser des mélanges des sources citées ci-dessus.

Conformément à l'invention, R est un composé organique azoté, le 1,6-bis(méthylpiperidinium)hexane, ledit composé étant incorporé dans le mélange réactionnel pour la mise en œuvre de l'étape (i), comme structurant organique. L'anion associé aux cations ammoniums quaternaires présents dans l'espèce organique structurante pour la synthèse d'une zéolithe IZM-2 selon l'invention est l'anion hydroxyde (OH⁻).

Conformément à l'invention, au moins une source d'au moins un métal alcalin M de valence n choisie parmi les chlorures de métaux alcalin, est mise en œuvre dans le mélange réactionnel de l'étape i), n étant un entier supérieur ou égal à 1, M étant de préférence choisi parmi le lithium, le potassium, le sodium, le césium, et le mélange d'au moins deux de ces métaux. De préférence, M est le sodium.

De manière très préférée, la source d'au moins un métal alcalin M est le chlorure de sodium.

Dans l'étape i) de mélange, l'hydroxyde de sodium NaOH n'est pas utilisé comme source d'au moins un métal alcalin.

Conformément à l'invention, au moins une source d'au moins un anion fluorure nommé BF peut éventuellement être ajoutée audit mélange réactionnel de l'étape i), BF étant choisi parmi l'acide fluorhydrique en solution aqueuse et les sels de fluor dans lequel B est un cation choisi parmi les cations NH₄⁺, Na⁺, K⁺ et Li⁺, et le mélange d'au moins deux de ces sels. De préférence , BF est un sel de fluor dans lequel B est le cation NH₄⁺. Ainsi, la source d'au moins un anion fluorure est de préférence le NH₄F en solution aqueuse.

Selon l'invention, l'étape i) de mélange peut être mise en œuvre en présence d'anions fluorure ou non. La quantité molaire exprimée sous forme BF de la source d'anions fluorés dans la composition molaire du mélange réactionnel de l'étape i) est telle que :
BF/XO₂ compris entre 0 et 0,25, de préférence entre 0 et 0,2.

Dans un mode de réalisation préféré, il peut être avantageux d'additionner des germes d'une zéolithe IZM-2 au mélange réactionnel au cours de ladite étape i) du procédé de l'invention afin de réduire le temps nécessaire à la formation des cristaux d'une zéolithe IZM-2 et/ou la durée totale de cristallisation. Lesdits germes cristallins favorisent également la formation de ladite zéolithe IZM-2 au détriment d'impuretés. De tels germes comprennent des solides cristallisés, notamment des cristaux d'une zéolithe IZM-2. Les germes cristallins sont généralement ajoutés dans une proportion comprise entre 0,01 et 10% de la masse totale des sources desdits élément(s) tétravalent(s) et trivalent(s) sous forme anhydre utilisées dans le mélange réactionnel, lesdits germes cristallins n'étant pas pris en compte dans la masse totale des sources des éléments tétravalents et trivalents. Lesdits germes ne sont pas non plus pris en compte pour déterminer la composition du mélange réactionnel et/ou du gel, définie plus avant, c'est-à-dire dans la détermination des différents rapports molaires de la composition du mélange réactionnel.

L'étape i) de mélange est mise en œuvre jusqu'à obtention d'un mélange homogène, de préférence pendant une durée supérieure ou égale à 30 minutes, de préférence sous agitation par tout système connu de l'homme du métier à faible ou fort taux de cisaillement.

A l'issue de l'étape i) on obtient un gel précurseur homogène.

Avantageusement, le gel précurseur obtenu à l'issue de l'étape i) présente un ratio molaire de la quantité totale exprimée en oxydes d'éléments tétravalents sur la quantité totale exprimée en oxydes d'éléments trivalents compris entre 80 et 300.

Dans le cas où X=Si et Y=AI, le gel précurseur obtenu à l'issue de l'étape i) présente un ratio molaire SiO₂/Al₂O₃ compris entre 80 et 300.

Selon un mode de réalisation, il peut être avantageux de mettre en œuvre un mûrissement, au cours de l'étape i), du mélange réactionnel obtenu à l'issu de l'étape i) et avant l'étape ii) de cristallisation hydrothermale afin de contrôler la taille des cristaux d'une zéolithe IZM-2. Ledit mûrissement favorise également la formation de ladite zéolithe IZM-2 au détriment d'impuretés. Le mûrissement du mélange réactionnel obtenu à l'issue de ladite étape i) du procédé de l'invention peut être réalisé à température ambiante ou à une température comprise entre 20 et 100°C avec ou sans agitation, pendant une durée avantageusement comprise entre 30 min et 48 heures.

Conformément à l'invention, le procédé comprend une étape ii) qui consiste en le traitement hydrothermal dudit gel précurseur obtenu à l'issue de l'étape i) à une température comprise entre 120°C et 220°C, pendant une durée comprise entre 1 jours et 10 jours.

L'étape ii) de traitement hydrothermal dudit gel précurseur est mis en œuvre jusqu'à ce que ladite zéolithe IZM-2 cristallise.

Le gel précurseur est avantageusement mis sous conditions hydrothermales sous une pression de réaction autogène, éventuellement en ajoutant du gaz, par exemple de l'azote, à une température de comprise entre 120°C et 220°C, de préférence entre 150°C et 195°C, jusqu'à la cristallisation complète d'une zéolithe IZM-2.

La durée nécessaire pour obtenir la cristallisation varie entre 1 jours et 10 jours, et de manière préférée entre 2 jours et 8 jours.

L'étape ii) de traitement hydrothermal dudit gel précurseur est de préférence mise en œuvre sous agitation ou en absence d'agitation, de préférence sous agitation. Comme système d'agitation on peut utiliser tout système connu par l'homme de métier, par exemple, des pales inclinées avec des contrepales, des turbines d'agitation, des vis d'Archimède.

A la fin de la réaction, après mise en œuvre de ladite étape ii) du procédé de préparation selon l'invention, la phase solide formée d'une zéolithe IZM-2 est de préférence filtrée, lavée puis séchée. Le séchage est généralement réalisé à une température comprise entre 20 et 150°C, de préférence entre 60 et 100°C, pendant une durée comprise entre 5 et 24 heures.

La zéolithe séchée peut ensuite être avantageusement calcinée. La zéolithe IZM-2, calcinée, est généralement analysée par diffraction des rayons X, cette technique permet également de déterminer la pureté de ladite zéolithe obtenue par le procédé de l'invention.

De manière très avantageuse, le procédé de l'invention conduit à la formation d'une zéolithe IZM-2, exempte de toute autre phase cristallisée ou amorphe. Ladite zéolithe IZM-2, après l'étape de séchage, est ensuite prête pour des étapes ultérieures telles que la calcination et l'échange d'ions. Pour ces étapes, toutes les méthodes conventionnelles connues de l'homme du métier peuvent être employées.

L'étape de calcination d'une zéolithe IZM-2 obtenue selon le procédé de l'invention est préférentiellement réalisée à une température comprise entre 450 et 700°C pendant une durée comprise entre 2 et 20 heures, la calcination pouvant être précédée d'une montée en température progressive.

La zéolithe IZM-2 obtenue à l'issue de l'étape de calcination est dépourvue de toute espèce organique et en particulier du structurant organique R(OH)₂.

A l'issue de ladite étape de calcination, la diffraction des rayons X permet de vérifier que le solide obtenu par le procédé selon l'invention est bien une zéolithe IZM-2. La pureté obtenue est avantageusement supérieure à 90%, de préférence supérieure à 95%, de manière très préférée supérieure à 99,8% en poids. Le solide obtenu présente le diagramme de diffraction de rayons X incluant au moins les raies inscrites dans le Tableau 1. De préférence, le diagramme de diffraction X ne contient pas d'autres raies d'intensité significative (c'est-à-dire d'intensité supérieure à environ trois fois le bruit de fond) que celle inscrites dans le Tableau 1.

Ce diagramme de diffraction est obtenu par analyse radiocristallographique au moyen d'un diffractomètre en utilisant la méthode classique des poudres avec le rayonnement Kα1 du cuivre (λ = 1,5406Â). A partir de la position des pics de diffraction représentée par l'angle 2θ, on calcule, par la relation de Bragg, les équidistances réticulaires dhkl caractéristiques de l'échantillon. L'erreur de mesure Δ(dₕₖₗ) sur dhkl est calculée grâce à la relation de Bragg en fonction de l'erreur absolue Δ(2θ) affectée à la mesure de 2θ. Une erreur absolue Δ(2θ) égale à ± 0,02° est communément admise. L'intensité relative Irel affectée à chaque valeur de dhkl est mesurée d'après la hauteur du pic de diffraction correspondant. Le diagramme de diffraction des rayons X du solide cristallisé IZM-2 selon l'invention comporte au moins les raies aux valeurs de dhkl données dans le Tableau 1. Dans la colonne des dhkl, on a indiqué les valeurs moyennes des distances inter-réticulaires en Angströms (Â). Chacune de ces valeurs doit être affectée de l'erreur de mesure Δ(dₕₖₗ) comprise entre ± 0,6Â et ± 0,01Â.

**Tableau 1 : Valeurs moyennes des dₕₖₗ et intensités relatives mesurées sur un diagramme de diffraction de rayons X du solide cristallisé IZM-2.**

| 2 thêta (°) | dhkl (Â) | Irel | 2 thêta (°) | dhkl (Â) | Irel |
|---|---|---|---|---|---|
| 7,26 | 12,17 | m | 22,29 | 3,98 | f |
| 7,65 | 11,56 | m | 23,55 | 3,85 | m |
| 8,71 | 10,14 | mf | 24,47 | 3,78 | ff |
| 12,09 | 7,31 | ff | 26,72 | 3,64 | ff |
| 14,77 | 5,99 | ff | 29,39 | 3,33 | ff |
| 15,25 | 5,81 | ff | 33,02 | 3,04 | ff |
| 18,06 | 4,91 | ff | 36,62 | 2,45 | ff |
| 18,95 | 4,68 | ff | 44,56 | 2,03 | ff |
| 21,14 | 4,19 | FF | 49,04 | 1,86 | ff |

où FF = très fort ; F = fort ; m = moyen ; mf = moyen faible ; f = faible ; ff = très faible. l'intensité relative Irel étant donnée en rapport à une échelle d'intensité relative où il est attribué une valeur de 100 à la raie la plus intense du diagramme de diffraction des rayons X : ff <15 ; 15 ≤ f <30 ; 30 ≤ mf <50 ; 50 ≤ m < 65 ; 65 ≤ F < 85 ; FF ≥ 85.

Il est également avantageux d'obtenir la forme protonée de la zéolithe IZM-2 obtenue par le procédé selon l'invention. Ladite forme protonée peut être obtenue en effectuant un échange d'ions avec un acide, en particulier un acide minéral fort comme l'acide chlorhydrique, sulfurique ou nitrique, ou avec un composé tel que le chlorure, le sulfate ou le nitrate d'ammonium. L'échange d'ions peut être effectué par mise en suspension de ladite zéolithe IZM-2 en une ou plusieurs fois avec la solution d'échange d'ions. Ladite zéolithe peut être calcinée avant ou après l'échange d'ions, ou entre deux étapes d'échange d'ions. La zéolithe est, de préférence, calcinée avant l'échange d'ions, afin d'éliminer toute substance organique incluse dans la porosité de la zéolithe, dans la mesure où l'échange d'ions s'en trouve facilité.

La zéolithe IZM-2 obtenue par le procédé de l'invention peut être utilisée après échange ionique comme solide acide pour la catalyse dans les domaines du raffinage et de la pétrochimie. Elle peut également être utilisée comme adsorbant ou comme tamis moléculaire.

Le procédé selon l'invention permet l'obtention d'une zéolithe IZM-2 ayant avantageusement un rapport SiO₂/Al₂O₃ compris entre 70 et 350, de préférence entre 80 et 300 dans le cas ou X = Si, et Y=AI.

Pour déterminer le rapport SiO₂/Al₂O₃ de la zéolithe obtenue, les techniques d'analyse suivantes sont utilisées :
La spectrométrie de fluorescence des rayons X (FX) est une technique d'analyse chimique utilisant une propriété physique de la matière, la fluorescence de rayons X. Elle permet l'analyse de la majorité des éléments chimiques à partir du Béryllium (Be) dans des gammes de concentration allant de quelques ppm à 100%, avec des résultats précis et reproductibles. On utilise les rayons X pour exciter les atomes qui sont dans l'échantillon, ce qui leur fait émettre des rayons X à énergie caractéristique de chaque élément présent. L'intensité et l'énergie de ces rayons X sont ensuite mesurées pour déterminer la concentration des éléments dans le matériau.

La spectrométrie de masse à plasma induit (ICP) est une technique d'analyse chimique qui permet mesure les radiations émises par les atomes excités ou ionisés. Pour être excité, l'échantillon est injecté dans un plasma d'argon a des températures très élevées (8000 K). A cette température, l'échantillon subit une fusion, vaporisation ionisation et une excitation thermique. La lumière émise par les ions excités est détectée et mesurée par un spectromètre à émission optique (OES).

Liste des figures
La Figure 1 représente la formule chimique du dihydroxyde de 1,6-bis(méthylpiperidinium)hexane choisi comme structurant dans le procédé de synthèse selon l'invention.
La Figure 2 représente le diagramme de diffraction X de la zéolithe IZM-2 obtenue selon l'exemple 2.

D'autres caractéristiques et avantages du procédé de synthèse selon l'invention, apparaîtront à la lecture de la description ci-après d'exemples non limitatifs de réalisations, en se référant aux figures annexées et décrites ci-après.

### Exemples

### Exemple 1: préparation du dihydroxyde de 1,6-bis(méthylpiperidinium)hexane [R(OH)₂] :

50 g de 1,6-dibromohexane (0,20 mole, 99%, Alfa Aesar) sont ajoutés dans un ballon de 1 L contenant 50 g de N-méthylpipéridine (0,51 mole, 99%, Alfa Aesar) et 200 mL d'éthanol. Le milieu réactionnel est agité et porté à reflux pendant 5 h. Le mélange est ensuite refroidi à température ambiante puis filtré. Le mélange est versé dans 300 mL de diéthyléther froid puis le précipité formé est filtré et lavé avec 100 mL de diéthyléther. Le solide obtenu est recristallisé dans un mélange éthanol/éther. Le solide obtenu est séché sous vide pendant 12 h. On obtient 71 g d'un solide blanc (soit un rendement de 80 %).

Le produit possède le spectre RMN 1H attendu. RMN 1H (D2O, ppm/TMS) : 1,27

(4H,m) ; 1,48 (4H,m) ; 1,61 (4H,m) ; 1,70 (8H,m) ; 2,85 (6H,s) ; 3,16 (12H,m).

18,9 g d'Ag2O (0,08 mole, 99%, Aldrich) sont ajoutés dans un bécher en téflon de 250 ml contenant 30 g du structurant dibromure de 1,6-bis(méthylpiperidinium) (0,07 mole) préparé selon l'exemple 1 et 100 ml d'eau déionisée. Le milieu réactionnel est agité à l'abri de la lumière pendant 12h. Le mélange est ensuite filtré. Le filtrat obtenu est composé d'une solution aqueuse de dihydroxyde de 1,6-bis(méthylpiperidinium)hexane. Le dosage de cette espèce est réalisé par RMN du proton en utilisant l'acide formique en tant qu'étalon.

### Exemple n°2 préparation d'un solide IZM-2 selon l'invention:

3,486 g d'une solution aqueuse de dihydroxyde de 1,6-bis(méthylpiperidinium)hexane (18,36% en poids) préparé selon l'exemple 1, ont été mélangés avec 1,434 g d'eau déionisée. 0,427 g de chlorure de sodium (solide, pureté 99% en poids, Afa Aesar) sont ajoutés au mélange précédent, la préparation obtenue est maintenue sous agitation pendant 10 minutes. Par la suite, 0,009 g de gel amorphe d'hydroxyde d'aluminium (Al(OH)₃ gel amorphe, 58,55% Al₂O₃, Merck) sont incorporés et le gel de synthèse est maintenu sous agitation pendant 15 minutes. 1,828 g de silice colloïdale (Ludox HS40, 40% en poids, Aldrich) ont été incorporés dans le mélange qui est maintenu sous agitation pendant 15 minutes. Au final, 0,866 g d'une solution aqueuse de fluorure d'ammonium (10% en poids) est incorporée dans le mélange de synthèse qui est maintenu sous agitation pendant une demi-heure pour évaporer le solvant jusqu'à obtenir la composition du gel précurseur désirée, c'est-à-dire une composition molaire du mélange suivante: 60 SiO₂: 0,25 Al₂O₃: 10 R(OH)₂: 9,6 NaCl: 1770 H₂O: 10 NH₄F, soit un ratio SiO₂/Al₂O₃ du gel obtenu de 240. Le gel précurseur est ensuite transféré, après homogénéisation, dans un autoclave. L'autoclave est fermé puis chauffé pendant 8 jours à 170°C sous agitation à 32 tr/min avec un système tourne-broche. Le produit cristallisé obtenu est filtré, lavé à l'eau déionisée puis séché une nuit à 100°C. Le solide est ensuite introduit dans un four à moufle où est réalisée une étape de calcination: le cycle de calcination comprend une montée de 1,5°C/min en température jusqu'à 200°C, un palier à 200°C maintenu durant 2 heures, une montée de 1°C/min en température jusqu'à 550°C suivi d'un palier à 550°C maintenu durant 8 heures puis un retour à la température ambiante.

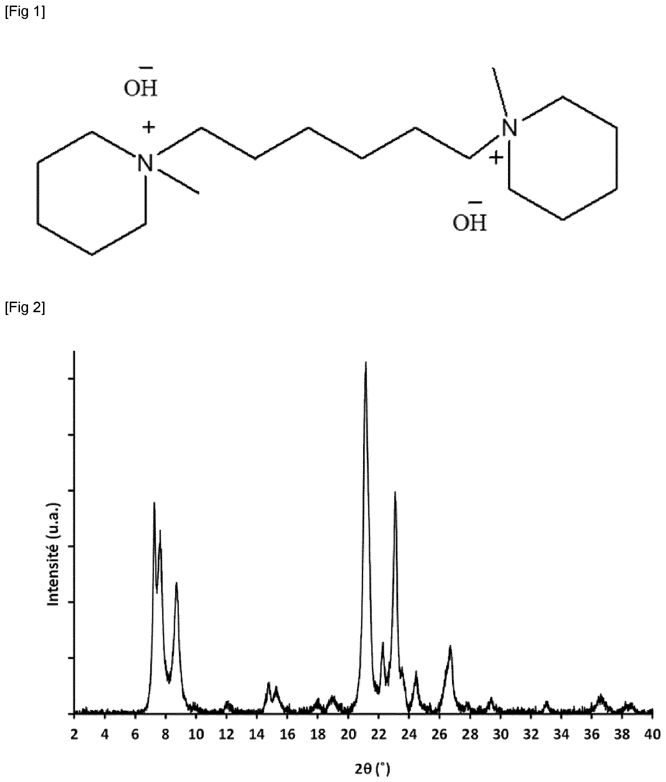

Le produit solide calciné a été analysé par diffraction des rayons X et identifié comme étant constitué d'une zéolithe IZM-2 de pureté supérieure à 99,8%. Le diagramme de diffraction effectué sur le solide microporeux IZM-2 calciné est donné sur la Figure 2.

### Exemple n°3 préparation d'un solide IZM-2 selon l'invention

43,564 g d'une solution aqueuse de dihydroxyde de 1,6-bis(méthylpiperidinium)hexane (18,36% en poids) préparé selon l'exemple 1, ont été mélangés avec 26,721 g d'eau déionisée. 5,328 g de chlorure de sodium (solide, pureté 99% en poids, Afa Aesar) sont ajoutés au mélange précédent, la préparation obtenue est maintenue sous agitation pendant 10 minutes. Par la suite, 0,111 g de gel amorphe d'hydroxyde d'aluminium (Al(OH)₃ gel amorphe, 58,55% Al₂O₃, Merck) sont incorporés et le gel de synthèse est maintenu sous agitation pendant 15 minutes. 22,773 g de silice colloïdale (Ludox HS40, 40% en poids, Aldrich) ont été incorporés dans le mélange est maintenu sous agitation pendant 15 minutes. Au final, 10,854 g d'une solution aqueuse de fluorure d'ammonium (10% en poids) sont incorporés dans le mélange de synthèse qui est maintenu sous agitation pendant une demi-heure pour évaporer le solvant jusqu'à obtenir la composition du gel précurseur désirée, c'est-à-dire une composition molaire du mélange suivante: 60 SiO₂: 0,25 Al₂O₃: 10 R(OH)₂: 9,6 NaCl: 1770 H₂O: 10 NH₄F, soit un ratio SiO₂/Al.₂O₃ du gel de 240. Le gel précurseur est ensuite transféré dans un réacteur inox de 1000 mL doté d'un système d'agitation à 4 pales inclinées. Le réacteur est fermé, puis chauffé pendant 8 jours à 170°C sous agitation à 350 tr/min. Le produit cristallisé obtenu est filtré, lavé à l'eau déionisée puis séché une nuit à 100°C. Le solide est ensuite introduit dans un four à moufle où est réalisée une étape de calcination: le cycle de calcination comprend une montée de 1,5°C/min en température jusqu'à 200°C, un palier à 200°C maintenu durant 2 heures, une montée de 1°C/min en température jusqu'à 550°C suivi d'un palier à 550°C maintenu durant 8 heures puis un retour à la température ambiante.

Le produit solide calciné a été analysé par diffraction des rayons X et identifié comme étant constitué d'une zéolithe IZM-2 de pureté supérieure à 99,8%. La zéolithe IZM-2 obtenue présente un rapport molaire SiO₂/Al₂O₃ de 222,3 tel que déterminé par fluorescence X et ICP

### Exemple n°4 préparation d'un solide IZM-2 selon l'invention:

3,522 g d'une solution aqueuse de dihydroxyde de 1,6-bis(méthylpiperidinium)hexane (18,36% en poids) préparé selon l'exemple 1, ont été mélangés avec 1,619 g d'eau déionisée. 0,194 g de chlorure de sodium (solide, pureté 99% en poids, Afa Aesar) sont ajoutés au mélange précédent, la préparation obtenue est maintenue sous agitation pendant 10 minutes. Par la suite, 0,01 g de gel amorphe d'hydroxyde d'aluminium (Al(OH)₃ gel amorphe, 58,55% Al₂O₃, Merck) sont incorporés et le gel de synthèse est maintenu sous agitation pendant 15 minutes. 1,837 g de silice colloïdale (Ludox HS40, 40% en poids, Aldrich) ont été incorporés dans le mélange est maintenu sous agitation pendant 15 minutes. Au final, 0,863 g d'une solution aqueuse de fluorure d'ammonium (10% en poids) sont incorporés dans le mélange de synthèse qui est maintenu sous agitation pendant une demi-heure pour évaporer le solvant jusqu'à obtenir la composition du gel précurseur désirée, c'est-à-dire une composition molaire du mélange suivante: 60 SiO₂: 0,25 Al₂O₃: 10 R(OH)₂: 4,8 NaCl: 1770 H₂O: 10 NH₄F, soit un ratio SiO₂/Al₂O₃ de 240. Le gel précurseur est ensuite transféré, après homogénéisation, dans un autoclave. L'autoclave est fermé puis chauffé pendant 8 jours à 170°C sous agitation à 32 tr/min avec un système tourne-broche. Le produit cristallisé obtenu est filtré, lavé à l'eau déionisée puis séché une nuit à 100°C. Le solide est ensuite introduit dans un four à moufle où est réalisée une étape de calcination: le cycle de calcination comprend une montée de 1,5°C/min en température jusqu'à 200°C, un palier à 200°C maintenu durant 2 heures, une montée de 1°C/min en température jusqu'à 550°C suivi d'un palier à 550°C maintenu durant 8 heures puis un retour à la température ambiante.

Le produit solide calciné a été analysé par diffraction des rayons X et identifié comme étant constitué d'une zéolithe IZM-2 de pureté supérieure à 99,8%.

### Exemple n°5 préparation d'un solide IZM-2 selon l'invention :

39,497 g d'une solution aqueuse de dihydroxyde de 1,6-bis(méthylpiperidinium)hexane (18,36% en poids) préparé selon l'exemple 1, ont été mélangés avec 26,011 g d'eau déionisée. 2,273 g de chlorure de sodium (solide, pureté 99% en poids, Alfa Aesar) sont ajoutés au mélange précédent, la préparation obtenue est maintenue sous agitation pendant 10 minutes. Par la suite, 0,102 g de gel amorphe d'hydroxyde d'aluminium (Al(OH)₃ gel amorphe, 58,55% Al₂O₃, Merck) sont incorporés et le gel de synthèse est maintenu sous agitation pendant 15 minutes. 20,618 g de silice colloïdale (Ludox HS40, 40% en poids, Aldrich) sont incorporés dans le mélange est maintenu sous agitation pendant 15 minutes. Au final, 9,727 g d'une solution aqueuse de fluorure d'ammonium (10% en poids) sont incorporés dans le mélange de synthèse qui est maintenu sous agitation pendant une demi-heure pour évaporer le solvant jusqu'à obtenir la composition du gel précurseur désirée, c'est-à-dire une composition molaire du mélange suivante: 60 SiO₂: 0,25 Al₂O₃: 10 R(OH)₂: 4,8 NaCl: 1770 H₂O: 10 NH₄F, soit un ratio SiO₂/Al₂O₃ de 240. Le gel précurseur est ensuite transféré dans un réacteur inox de 160 mL doté d'un système d'agitation à 4 pales inclinées. Le réacteur est fermé, puis chauffé pendant 8 jours à 170°C sous agitation à 350 tr/min. Le produit cristallisé obtenu est filtré, lavé à l'eau déionisée puis séché une nuit à 100°C. Le solide est ensuite introduit dans un four à moufle où est réalisée une étape de calcination: le cycle de calcination comprend une montée de 1,5°C/min en température jusqu'à 200°C, un palier à 200°C maintenu durant 2 heures, une montée de 1°C/min en température jusqu'à 550°C suivi d'un palier à 550°C maintenu durant 8 heures puis un retour à la température ambiante.

Le produit solide calciné a été analysé par diffraction des rayons X et identifié comme étant constitué d'une zéolithe IZM-2 de pureté supérieure à 99,8%. Le produit présente un rapport molaire SiO₂/Al₂O₃ de 212,8 tel que déterminé par fluorescence X et ICP.

### Exemple n°6 préparation d'un solide IZM-2 selon l'invention :

3,473 g d'une solution aqueuse de dihydroxyde de 1,6-bis(méthylpiperidinium)hexane (18,36% en poids) préparé selon l'exemple 1, sont mélangés avec 1,819 g d'eau déionisée. 0,921 g de chlorure de sodium (solide, pureté 99% en poids, Alfa Aesar) sont ajoutés au mélange précédent, la préparation obtenue est maintenue sous agitation pendant 10 minutes. Par la suite, 0,009 g de gel amorphe d'hydroxyde d'aluminium (Al(OH)₃ gel amorphe, 58,55% Al₂O₃, Merck) sont incorporés et le gel de synthèse est maintenu sous agitation pendant 15 minutes. Au final, 1,808 g de silice colloïdale (Ludox HS40, 40% en poids, Aldrich) sont incorporés dans le mélange de synthèse qui est maintenu sous agitation pendant une demi-heure pour évaporer le solvant jusqu'à obtenir la composition du gel précurseur désirée, c'est-à-dire une composition molaire du mélange suivante: 60 SiO₂: 0,25 Al₂O₃: 10 R(OH)₂: 20 NaCl: 1770 H₂O, soit un ratio SiO₂/Al₂O₃ de 240. Le gel précurseur est ensuite transféré, après homogénéisation, dans un autoclave. L'autoclave est fermé puis chauffé pendant 6 jours à 170°C sous agitation à 32 tr/min avec un système tourne-broche. Le produit cristallisé obtenu est filtré, lavé à l'eau déionisée puis séché une nuit à 100°C. Le solide est ensuite introduit dans un four à moufle où est réalisée une étape de calcination: le cycle de calcination comprend une montée de 1,5°C/min en température jusqu'à 200°C, un palier à 200°C maintenu durant 2 heures, une montée de 1°C/min en température jusqu'à 550°C suivi d'un palier à 550°C maintenu durant 8 heures puis un retour à la température ambiante.

Le produit solide calciné a été analysé par diffraction des rayons X et identifié comme étant constitué d'une zéolithe IZM-2 de pureté supérieure à 99,8%.

### Exemple n°7 préparation d'un solide IZM-2 selon l'invention :

3,496 g d'une solution aqueuse de dihydroxyde de 1,6-bis(méthylpiperidinium)hexane (18,36% en poids) préparé selon l'exemple 1, sont mélangés avec 2,020 g d'eau déionisée. 0,681 g de chlorure de sodium (solide, pureté 99% en poids, Alfa Aesar) sont ajoutés au mélange précédent, la préparation obtenue est maintenue sous agitation pendant 10 minutes. Par la suite, 0,009 g de gel amorphe d'hydroxyde d'aluminium (Al(OH)₃ gel amorphe, 58,55% Al₂O₃, Merck) sont incorporés et le gel de synthèse est maintenu sous agitation pendant 15 minutes. Au final, 1,835 g de silice colloïdale (Ludox HS40, 40% en poids, Aldrich) sont incorporés dans le mélange de synthèse qui est maintenu sous agitation pendant une demi-heure pour évaporer le solvant jusqu'à obtenir la composition du gel précurseur désirée, c'est-à-dire une composition molaire du mélange suivante: 60 SiO₂: 0,25 Al₂O₃: 10 R(OH)₂: 15 NaCl: 1770 H₂O, soit un ratio SiO₂/Al₂O₃ de 240. Le gel précurseur est ensuite transféré, après homogénéisation, dans un autoclave. L'autoclave est fermé puis chauffé pendant 6 jours à 170°C sous agitation à 32 tr/min avec un système tourne-broche. Le produit cristallisé obtenu est filtré, lavé à l'eau déionisée puis séché une nuit à 100°C. Le solide est ensuite introduit dans un four à moufle où est réalisée une étape de calcination: le cycle de calcination comprend une montée de 1,5°C/min en température jusqu'à 200°C, un palier à 200°C maintenu durant 2 heures, une montée de 1°C/min en température jusqu'à 550°C suivi d'un palier à 550°C maintenu durant 8 heures puis un retour à la température ambiante.

Le produit solide calciné a été analysé par diffraction des rayons X et identifié comme étant constitué d'une zéolithe IZM-2 de pureté supérieure à 99,8%.

### Exemple n°8 préparation d'un solide IZM-2 selon l'invention :

1,831 g d'une solution aqueuse de dihydroxyde de 1,6-bis(méthylpiperidinium)hexane (18,36% en poids) préparé selon l'exemple 1, sont mélangés avec 3,578 g d'eau déionisée. 0,722 g de chlorure de sodium (solide, pureté 99% en poids, Alfa Aesar) sont ajoutés au mélange précédent, la préparation obtenue est maintenue sous agitation pendant 10 minutes. Par la suite, 0,011 g de gel amorphe d'hydroxyde d'aluminium (Al(OH)₃ gel amorphe, 58,55% Al₂O₃, Merck) sont incorporés et le gel de synthèse est maintenu sous agitation pendant 15 minutes. Au final, 1,908 g de silice colloïdale (Ludox HS40, 40% en poids, Aldrich) ont été incorporés dans le mélange de synthèse qui est maintenu sous agitation pendant une demi-heure pour évaporer le solvant jusqu'à obtenir la composition du gel précurseur désirée, c'est-à-dire une composition molaire du mélange suivante: 60 SiO₂: 0,3 Al₂O₃: 5 R(OH)₂: 15 NaCl: 1770 H₂O, soit un ratio SiO₂/Al₂O₃ de 200. Le gel précurseur est ensuite transféré, après homogénéisation, dans un autoclave. L'autoclave est fermé puis chauffé pendant 4 jours à 170°C sous agitation à 32 tr/min avec un système tourne-broche. Le produit cristallisé obtenu est filtré, lavé à l'eau déionisée puis séché une nuit à 100°C. Le solide est ensuite introduit dans un four à moufle où est réalisée une étape de calcination: le cycle de calcination comprend une montée de 1,5°C/min en température jusqu'à 200°C, un palier à 200°C maintenu durant 2 heures, une montée de 1°C/min en température jusqu'à 550°C suivi d'un palier à 550°C maintenu durant 8 heures puis un retour à la température ambiante.

Le produit solide calciné a été analysé par diffraction des rayons X et identifié comme étant constitué d'une zéolithe IZM-2 de pureté supérieure à 99,8%.

### Exemple n°9 préparation d'un solide IZM-2 selon l'invention :

34,901 g d'une solution aqueuse de dihydroxyde de 1,6-bis(méthylpiperidinium)hexane (18,36% en poids) préparé selon l'exemple 1, sont mélangés avec 20,085 g d'eau déionisée. 6,799 g de chlorure de sodium (solide, pureté 99% en poids, Alfa Aesar) sont ajoutés au mélange précédent, la préparation obtenue est maintenue sous agitation pendant 10 minutes. Par la suite, 0,125 g de gel amorphe d'hydroxyde d'aluminium (Al(OH)₃ gel amorphe, 58,55% Al₂O₃, Merck) sont incorporés et le gel de synthèse est maintenu sous agitation pendant 15 minutes. Au final, 18,234 g de silice colloïdale (Ludox HS40, 40% en poids, Aldrich) sont incorporés dans le mélange de synthèse qui est maintenu sous agitation pendant une demi-heure pour évaporer le solvant jusqu'à obtenir la composition du gel précurseur désirée, c'est-à-dire une composition molaire du mélange suivante: 60 SiO₂: 0,35 Al₂O₃: 10 R(OH)₂: 15 NaCl: 1770 H₂O, soit un ratio SiO₂/Al₂O₃ de 171. Le gel précurseur est ensuite transféré dans un réacteur inox de 160 mL doté d'un système d'agitation à 4 pales inclinées. Le réacteur est fermé, puis chauffé pendant 4 jours à 170°C sous agitation à 350 tr/min. Le produit cristallisé obtenu est filtré, lavé à l'eau déionisée puis séché une nuit à 100°C. Le solide est ensuite introduit dans un four à moufle où est réalisée une étape de calcination: le cycle de calcination comprend une montée de 1,5°C/min en température jusqu'à 200°C, un palier à 200°C maintenu durant 2 heures, une montée de 1°C/min en température jusqu'à 550°C suivi d'un palier à 550°C maintenu durant 8 heures puis un retour à la température ambiante.

Le produit solide calciné a été analysé par diffraction des rayons X et identifié comme étant constitué d'une zéolithe IZM-2 de pureté supérieure à 99,8%.

## Revendications

1. Procédé de préparation d'une zéolithe IZM-2 comprenant au moins les étapes suivantes :
i) le mélange en milieu aqueux, d'au moins une source d'au moins un élément tétravalent X sous forme oxyde XO₂, au moins une source d'au moins un élément trivalent sous forme oxyde Y₂O₃, d'un composé organique azoté R(OH)₂, R(OH)₂ étant le dihydroxyde de 1,6-bis(méthylpiperidinium)hexane, d'au moins une source d'au moins un métal alcalin M de valence n choisie parmi les chlorures de métaux alcalin, n étant un entier supérieur ou égal à 1, M étant choisi parmi le lithium, le potassium, le sodium le césium, et le mélange d'au moins deux de ces métaux, et éventuellement en présence d'une source d'au moins un anion fluorure BF, le mélange réactionnel présentant la composition molaire suivante :
XO₂/Y₂O₃ compris entre 70 et 350,
H₂O/XO₂ compris entre 1et 100,
R(OH)₂/XO₂ compris entre 0,006 et 0,25,
M_{1/n}Cl/XO₂ compris entre 0,005 et 0,5,
BF/XO₂ compris entre 0 et 0,25,
avec X étant un ou plusieurs élément(s) tétravalent(s) choisi(s) dans le groupe formé par les éléments suivants : silicium, germanium, titane et au moins un élément X étant le silicium, Y est un ou plusieurs élément(s) trivalent(s) choisi(s) dans le groupe formé par les éléments suivants : aluminium, fer, bore, indium et gallium et au moins un élément Y étant l'aluminium, jusqu'à l'obtention d'un gel précurseur homogène, et BF étant choisi parmi l'acide fluorhydrique en solution aqueuse et les sels de fluor dans lequel B est un cation choisi parmi les cations NH₄⁺, Na⁺, K⁺ et Li⁺.
ii) le traitement hydrothermal dudit gel précurseur obtenu à l'issue de l'étape i) à une température comprise entre 120°C et 220°C, pendant une durée comprise entre 1 jours et 10 jours.

2. Procédé selon la revendication 1 dans lequel le mélange de l'étape i) comprend en outre un ou plusieurs élément(s) tétravalent(s) X autre que le silicium, choisi(s) dans le groupe formé par les éléments suivants : germanium, titane et/ou un ou plusieurs élément(s) trivalent(s) Y, autre que l'aluminium choisi(s) dans le groupe formé par les éléments suivants : fer, bore, indium et gallium.

3. Procédé selon l'une des revendications 1 ou 2 dans lequel le mélange réactionnel de l'étape i) présente la composition molaire suivante :
XO₂/Y₂O₃ compris entre 80 et 300
H₂O/XO₂ compris entre 5 et 50
R(OH)₂/XO₂ compris entre 0,01 et 0,20
M_{1/n}Cl/XO₂ compris entre 0,01 et 0,4
BF/XO₂ compris entre 0 et 0,2, BF, X, Y, R et M ayant la signification précitée.

4. Procédé selon l'une des revendications 1 à 3 dans lequel M est le sodium.

5. Procédé selon l'une des revendications 1 à 4 dans lequel BF est un sel de fluor dans lequel B est le cation NH₄⁺.

6. Procédé selon l'une des revendications 1 à 5 dans lequel, des germes cristallins d'une zéolithe IZM-2 sont ajoutés au mélange réactionnel de l'étape i), en quantité comprise entre 0,01 et 10% de la masse totale des sources desdits élément(s) tétravalent(s) et trivalent(s) sous forme anhydre utilisées dans le mélange réactionnel, lesdits germes cristallins n'étant pas pris en compte dans la masse totale des sources des éléments tétravalents et trivalents.

7. Procédé selon l'une des revendications 1 à 6 dans lequel, l'étape i) comprend une étape de mûrissement du mélange réactionnel obtenu à une température comprise entre 20 et 100°C, avec ou sans agitation, pendant une durée comprise entre 30 minutes et 48 heures.

8. Procédé selon l'une des revendications 1 à 7 dans lequel le traitement hydrothermal de l'étape ii) est réalisé sous pression autogène à une température comprise entre 150°C et 195°C, pendant une durée comprise 2 jours et 8 jours.

9. Procédé selon la revendication 8 dans lequel la phase solide obtenue à l'issue de l'étape ii) peut être filtrée, lavée, et séchée à une température comprise entre 20 et 150°C, de préférence entre 60 et 100°C, pendant une durée comprise entre 5 et 24 heures pour obtenir une zéolithe séchée.

10. Procédé selon la revendication 9 dans lequel la zéolithe séchée est ensuite calcinée à une température comprise entre 450 et 700°C pendant une durée comprise entre 2 et 20 heures, la calcination pouvant être précédée d'une montée en température progressive.

## Patentansprüche

1. Verfahren zur Herstellung eines IZM-2-Zeoliths, das mindestens die folgenden Schritte umfasst:
i) Mischen mindestens einer Quelle mindestens eines vierwertigen Elements X in XO₂-Oxidform, mindestens einer Quelle mindestens eines dreiwertigen Elements in Y₂O₃-Oxidform, einer stickstoffhaltigen organischen Verbindung R(OH)₂, wobei es sich bei R(OH)₂ um 1,6-Bis(methylpiperidinium)hexandihydroxid handelt, mindestens einer Quelle mindestens eines Alkalimetalls M mit der Wertigkeit n, ausgewählt aus Alkalimetallchloriden, wobei n für eine ganze Zahl größer oder gleich 1 steht, wobei M aus Lithium, Kalium, Natrium, Caesium und der Mischung von mindestens zwei dieser Metalle ausgewählt ist, in wässrigem Medium und gegebenenfalls in Gegenwart einer Quelle mindestens eines Fluorid-Anions BF, wobei die Reaktionsmischung die folgende molare Zusammensetzung aufweist:
XO₂/Y₂O₃ zwischen 70 und 350,
H₂O/XO₂ zwischen 1 und 100,
R(OH)₂/XO₂ zwischen 0,006 und 0,25,
M_{1/n}Cl/XO₂ zwischen 0,005 und 0,5,
BF/XO₂ zwischen 0 und 0,25,
wobei X für ein oder mehrere vierwertige Elemente aus der aus den folgenden Elementen gebildeten Gruppe steht: Silicium, Germanium, Titan, und mindestens ein Element X Silicium ist, Y für ein oder mehrere dreiwertige Elemente aus der aus den folgenden Elementen gebildeten Gruppe steht: Aluminium, Eisen, Bor, Indium und Kalium, und mindestens ein Element Y Aluminium ist, bis zum Erhalt eines homogenen Vorläufergels, wobei BF aus Fluorwasserstoffsäure in wässriger Lösung und Fluorsalzen, in denen B für ein aus den Kationen NH₄⁺, Na⁺, K⁺ und Li⁺ ausgewähltes Kation steht, ausgewählt ist;
ii) hydrothermale Behandlung des am Ende von Schritt i) erhaltenen Vorläufergels bei einer Temperatur zwischen 120 °C und 220 °C über einen Zeitraum zwischen 1 Tag und 10 Tagen.

2. Verfahren nach Anspruch 1, wobei die Mischung von Schritt i) außerdem ein oder mehrere vierwertige Elemente X, die von Silicium verschieden sind und aus der aus den folgenden Elementen gebildeten Gruppe ausgewählt sind: Germanium, Titan, und/oder ein oder mehrere dreiwertige Elemente Y, die von Aluminium verschieden sind und aus der aus den folgenden Elementen gebildeten Gruppe ausgewählt sind: Eisen, Bor, Indium und Galium, umfasst.

3. Verfahren nach Anspruch 1 oder 2, wobei die Reaktionsmischung von Schritt i) die folgende molare Zusammensetzung aufweist:
XO₂/Y₂O₃ zwischen 80 und 300,
H₂O/XO₂ zwischen 5 und 50,
R(OH)₂/XO₂ zwischen 0,01 und 0,20,
M_{1/n}Cl/XO₂ zwischen 0,01 und 0,4,
BF/XO₂ zwischen 0 und 0,2, wobei BF, X, Y, R und M die oben angegebene Bedeutung haben.

4. Verfahren nach einem der Ansprüche 1 bis 3, wobei M für Natrium steht.

5. Verfahren nach einem der Ansprüche 1 bis 4, wobei BF für ein Fluorsalz steht, in dem B für das Kation NH₄⁺ steht.

6. Verfahren nach einem der Ansprüche 1 bis 5, wobei zu der Reaktionsmischung von Schritt i) Kristallkeime eines IZM-2-Zeoliths in einer Menge zwischen 0,01 und 10 % der Gesamtmasse der Quellen des vierwertigen Elements bzw. der vierwertigen Elemente und des dreiwertigen Elements bzw. der dreiwertige Elemente im wasserfreier Form, die in der Reaktionsmischung verwendet werden, zugegeben werden, wobei die Kristallkeime in der Gesamtmasse der Quellen der vierwertigen und dreiwertigen Elemente nicht berücksichtigt werden.

7. Verfahren nach einem der Ansprüche 1 bis 6, wobei der Schritt i) einen Schritt der Reifung der erhaltenen Reaktionsmischung bei einer Temperatur zwischen 20 und 100 °C mit oder ohne Rühren über einen Zeitraum zwischen 30 Minuten und 48 Stunden umfasst.

8. Verfahren nach einem der Ansprüche 1 bis 7, wobei die hydrothermale Behandlung von Schritt ii) unter autogenem Druck bei einer Temperatur zwischen 150 °C und 195 °C über einen Zeitraum zwischen 2 Tagen und 8 Tagen durchgeführt wird.

9. Verfahren nach Anspruch 8, wobei die am Ende von Schritt ii) erhaltene feste Phase filtriert, gewaschen und bei einer Temperatur zwischen 20 und 150 °C, vorzugsweise zwischen 60 und 100 °C, über einen Zeitraum zwischen 5 und 24 Stunden getrocknet werden kann, um einen getrockneten Zeolith zu erhalten.

10. Verfahren nach Anspruch 9, wobei der getrocknete Zeolith dann bei einer Temperatur zwischen 450 und 700 °C über einen Zeitraum zwischen 2 und 20 Stunden calciniert wird, wobei der Calcinierung eine allmähliche Temperaturerhöhung vorhergehen kann.

## Claims

1. Process for preparing an IZM-2 zeolite, comprising at least the following steps:
i) mixing, in aqueous medium, of at least one source of at least one tetravalent element X in oxide form XO₂, at least one source of at least one trivalent element in oxide form Y₂O₃, a nitrogenous organic compound R(OH)₂, which is 1,6-bis(methylpiperidinium)hexane dihydroxide, at least one source of at least one alkali metal M of valency n chosen from alkali metal chlorides, n being an integer greater than or equal to 1, M being chosen from lithium, potassium, sodium and caesium, and the mixture of at least two of these metals, and optionally in the presence of at least one fluoride anion, BF, the reaction mixture having the following molar composition:
XO₂/Y₂O₃ between 70 and 350,
H₂O/XO₂ between 1 and 100,
R(OH)_{2/}XO₂ between 0.006 and 0.25,
M_{1/n}Cl/XO₂ between 0.005 and 0.5,
BF/XO₂ between 0 and 0.25,
with X being one or more tetravalent elements chosen from the group formed by the following elements: silicon, germanium, titanium, at least one element X being silicon, Y is one or more trivalent elements chosen from the group formed by the following elements: aluminium, iron, boron, indium and gallium, and at least one element Y being aluminium, until a homogeneous precursor gel is obtained, and BF being chosen from hydrofluoric acid in aqueous solution and fluorine salts in which B is a cation chosen from the cations NH₄⁺, Na⁺, K⁺ and Li⁺.
ii) hydrothermal treatment of said precursor gel obtained on conclusion of step i) at a temperature of between 120°C and 220°C, for a time of between 1 day and 10 days.

2. Process according to Claim 1, in which the mixture of step i) also comprises one or more tetravalent elements X other than silicon, chosen from the group formed by the following elements: germanium, titanium and/or one or more trivalent elements Y, other than aluminium, chosen from the group formed by the following elements: iron, boron, indium and gallium.

3. Process according to either of Claims 1 and 2, in which the reaction mixture from step i) has the following molar composition:
XO₂/Y₂O₃ between 80 and 300
H₂O/XO₂ between 5 and 50
R(OH)_{2/}XO₂ between 0.01 and 0.20
M_{1/n}Cl/XO₂ between 0.01 and 0.4
BF/XO₂ between 0 and 0.2, BF, X, Y, R and M having the abovementioned meaning.

4. Process according to one of Claims 1 to 3, in which M is sodium.

5. Process according to one of Claims 1 to 4, in which BF is a fluorine salt in which B is the NH₄⁺ cation.

6. Process according to one of Claims 1 to 5, in which seed crystals of an IZM-2 zeolite are added to the reaction mixture from step i) in an amount of between 0.01% and 10% of the total mass of the sources of said tetravalent and trivalent element(s) in anhydrous form used in the reaction mixture, said seed crystals not being taken into account in the total mass of the sources of the tetravalent and trivalent elements.

7. Process according to one of Claims 1 to 6, in which step i) comprises a step of maturing the reaction mixture obtained at a temperature of between 20 and 100°C, with or without stirring, for a time of between 30 minutes and 48 hours.

8. Process according to one of Claims 1 to 7, in which the hydrothermal treatment of step ii) is performed under autogenous pressure at a temperature of between 150°C and 195°C, for a time of between 2 days and 8 days.

9. Process according to Claim 8, in which the solid phase obtained on conclusion of step ii) may be filtered, washed and dried at a temperature of between 20 and 150°C, preferably between 60 and 100°C, for a time of between 5 and 24 hours to obtain a dried zeolite.

10. Process according to Claim 9, in which the dried zeolite is then calcined at a temperature of between 450 and 700°C for a time of between 2 and 20 hours, the calcining possibly being preceded by a gradual temperature increase.
